# EUROPEAN PATENT APPLICATION

(11) **EP 4 617 112 A1**
(43) Date of publication of application: **17.09.2025**
(21) Application number: 24214790.8
(22) Date of filing: 22.11.2024
(51) Int. Cl.: B60N 2/08, B60N 2/14

(54) **SWIVEL AND SLIDING APPARATUS FOR VEHICLE INTERIOR ELEMENTS**

(30) Priority: 11.03.2024 KR 20240033969
(71) Applicant: Hyundai Transys Inc., Chungcheongnam-do 31930 (KR)
(72) Inventor: CHO, Jae Hoon, 18463 Hwaseong-si, Gyeonggi-do (KR); KWAK, Hae Dong, 18463 Hwaseong-si, Gyeonggi-do (KR); KIM, Hyeon Jae, 18463 Hwaseong-si, Gyeonggi-do (KR); PARK, Han Kyung, 18463 Hwaseong-si, Gyeonggi-do (KR); LEE, Won Young, 18463 Hwaseong-si, Gyeonggi-do (KR); KANG, Sin Jeong, 18463 Hwaseong-si, Gyeonggi-do (KR)
(74) Representative: Viering, Jentschura & Partner mbB Patent- und Rechtsanwälte

(57) **Abstract**

A swivel and sliding apparatus for vehicle interior elements includes an interior element of a vehicle, a swivel unit installed in an interior space of the vehicle to rotate the interior element of the vehicle, and a sliding unit provided with one side connected to the interior element of the vehicle and a remaining side connected to the swivel unit to cause the interior element of the vehicle to slide with respect to the swivel unit. The interior element of the vehicle and the sliding unit are rotated together through the swivel unit.

## Description

### BACKGROUND

### (a) Technical Field

The present disclosure relates to a swivel and sliding apparatus for vehicle interior elements (for example, infotainment systems, seats, lights, steering wheels, speakers, and the like).

### (b) Background Art

A vehicle is equipped with vehicle interior elements including seats for passengers to sit on, a monitor to watch media, a console to operate devices inside the vehicle, and a table. Recently, development of autonomous vehicles and purpose-built vehicles (PBVs) continues, and accordingly, various designs are being attempted to transform a space inside a vehicle into a space in which various functions are performed.

The above information disclosed in this Background section is only for enhancement of understanding of the background of the disclosure and therefore it may contain information that does not form the prior art that is already known in this country to a person of ordinary skill in the art.

### SUMMARY OF THE DISCLOSURE

The present disclosure has been made in an effort to solve the above-described problems associated with the prior art, and it is an object of the present disclosure to provide a swivel and sliding apparatus for vehicle interior elements which enables rotation of a vehicle interior element and allows the center of rotation of the vehicle interior element to be changed, to diversify the internal structure of a vehicle.

In one aspect, the present disclosure provides a swivel and sliding apparatus including an interior element to be installed in an interior space of a vehicle, a swivel unit configured to rotate the interior element, and a sliding unit provided with one side connected to the interior element and a remaining side connected to the swivel unit to cause the interior element to slide with respect to the swivel unit, wherein the interior element and the sliding unit are rotated together through the swivel unit.

In an example embodiment, the interior element may include at least one of a monitor configured to transmit media, a console configured to operate a device in the vehicle, a table, and a seat.

In another example embodiment, the sliding unit may include an upper panel coupled to the interior element, and a lower panel configured such that the upper panel is slidably coupled to the lower panel so as to allow sliding of the interior element.

In yet another example embodiment, the lower panel is coupled to the swivel unit, and a length of the upper panel disposed on the lower panel is longer than a length of the lower panel with respect to a direction in which the upper panel slides.

In still another example embodiment, first bent portions configured to extend upward and be bent outward may be formed on the lower panel, second bent portions configured to extend downward and be bent inward may be formed on the upper panel, and the first bent portions and the second bent portions may be configured to be engaged with each other so that the upper panel is slidably coupled to the lower panel.

In yet another example embodiment, the first bent portions may be provided in plural along opposite sides of the lower panel and along a middle thereof, and the second bent portions may be provided in plural along opposite sides of the upper panel and along a middle thereof.

In still yet another example embodiment, the sliding unit may include a sliding latch configured to fix the interior element to the sliding unit or to release the interior element from the sliding unit.

In a further example embodiment, a first part of the sliding latch may be rotatably coupled to one side of the sliding unit, and a second part of the sliding latch may be inserted into fixing grooves formed on the sliding unit to fix the interior element of the vehicle to the sliding unit or may be released from the fixing grooves to release the interior element from the sliding unit.

In another further example embodiment, the sliding unit may further include an upper panel coupled to the interior element and having fixing grooves formed therein, and a lower panel configured such that the upper panel is slidably coupled to the lower panel so as to slide the interior element, the first part of the sliding latch may be rotatably coupled to the lower panel, and the second part of the sliding latch may be inserted into the fixing grooves formed in the upper panel to fix the interior element of the vehicle to the sliding unit or may be released from the fixing grooves to release the interior element from the sliding unit.

In still another further example embodiment, the swivel unit may include a swivel rotator configured to allow the interior element to selectively assume a rotatable state based on application of external force, and a trigger configured to transmit the external force to the swivel rotator.

In yet another further example embodiment, the swivel rotator may include a floor plate coupled to a floor of the vehicle or a moving rail provided on the floor, and a rotating plate provided on the floor plate and coupled to the sliding unit to allow the interior element to assume the rotatable state based on the application of the external force.

In still yet another further example embodiment, the rotating plate may include locking pins configured to move along opposite directions based on application of the external force, insertion recesses formed on the floor plate such that a first end of each of the locking pins may be insertable into a corresponding one of the insertion recesses, and when the first end of each of the locking pins is separated from the corresponding one of the insertion recesses, the interior element may become in the rotatable state, and when the first end of each of the locking pins is inserted into the corresponding one of the insertion recesses, the interior element may assume a non-rotatable state.

In a still further example embodiment, the trigger may include a swivel lever rotatably provided at one end of the interior element and connected to the swivel rotator through a wire, and the external force may be applied to the swivel rotator by rotation of the swivel lever.

In a still further example embodiment, the interior element is a seat, and the sliding unit is configured to move the seat in a direction perpendicular to a forward direction of the seat.

Other aspects and example embodiments of the disclosure are discussed infra.

The above and other features of the disclosure are discussed infra.

### BRIEF DESCRIPTION OF THE DRAWINGS

The above and other features of the present disclosure will now be described in detail with reference to certain exemplary embodiments thereof illustrated in the accompanying drawings which are given hereinbelow by way of illustration only, and thus are not limitative of the present disclosure, and wherein:
FIG. 1 is an exploded perspective view of a swivel and sliding apparatus for vehicle interior elements;
FIG. 2 is a cross-sectional view showing a state before an upper panel and a lower panel are coupled;
FIG. 3 is a cross-sectional view showing a state after the upper panel and the lower panel are coupled;
FIG. 4 is a view showing operation of a sliding latch;
FIG. 5 is a view showing sliding of an interior element of a vehicle;
FIG. 6 is an exploded perspective view of a swivel rotator;
FIG. 7 is a perspective view showing the swivel rotator provided on a moving rail;
FIGs. 8 to 13 are views illustrating operation of the swivel rotator; and
FIG. 14 is a view showing a trigger.

It should be understood that the appended drawings are not necessarily to scale, presenting a somewhat simplified representation of various features illustrative of the basic principles of the disclosure. The specific design features of the present disclosure as disclosed herein, including, for example, specific dimensions, orientations, locations, and shapes, will be determined in part by the particular intended application and use environment.

In the figures, reference numbers refer to the same or equivalent parts of the present disclosure throughout the several figures of the drawing.

### DETAILED DESCRIPTION

Hereinafter reference will be made in detail to various embodiments of the present disclosure, examples of which are illustrated in the accompanying drawings and described below. In the following description and the drawings, the same or similar elements are denoted by the same reference numerals even though they are depicted in different drawings, and a redundant description thereof will be omitted.

In the following description of the embodiment of the present disclosure, a detailed description of known functions and configurations incorporated herein will be omitted when it may make the subject matter of the present disclosure rather unclear. In addition, it will be understood that the accompanying drawings are only for easy understanding of the embodiments of the present disclosure, the technical idea disclosed in the present disclosure is not limited by the accompanying drawings, and the embodiments of the present disclosure are provided only to completely disclose the disclosure and cover modifications, equivalents or alternatives which come within the scope and technical range of the disclosure.

In the following description of the embodiments, terms, such as "first" and "second", are used only to describe various elements, and these elements should not be construed as being limited by these terms. These terms are used only to distinguish one element from other elements.

As used herein, singular forms may be intended to include plural forms as well, unless the context clearly indicates otherwise

The terms "comprises," "comprising," "including," and "having" are inclusive and therefore specify the presence of stated features, integers, operations, operations, elements, components, and/or combinations thereof, but do not preclude the presence or addition of one or more other features, integers, operations, operations, elements, components, and/or combinations thereof.

The suffixes "module," "unit," and "part" for components used in the following description are given or used interchangeably only for the ease of preparing the disclosure, and do not have distinct meanings or roles in themselves.

When an element or layer is referred to as being "connected to" or "coupled to" another element or layer, it may be directly connected or coupled to the other element or layer, or intervening elements or layers may be present. In contrast, when an element or layer is referred to as being "directly connected to" or "directly coupled to" another element or layer, there may be no intervening elements or layers present. Other words used to describe relationships between elements should be interpreted in a like fashion, e.g., "between" versus "directly between," "adjacent" versus "directly adjacent," etc.

A controller is a communication device which communicates with other controllers or sensors to control functions of which the controller is in charge, a memory which stores operating systems, logic commands, input/output information, and the like, and at least one processor which performs judgements, calculations, and decisions necessary to control the functions of which the controller is in charge.

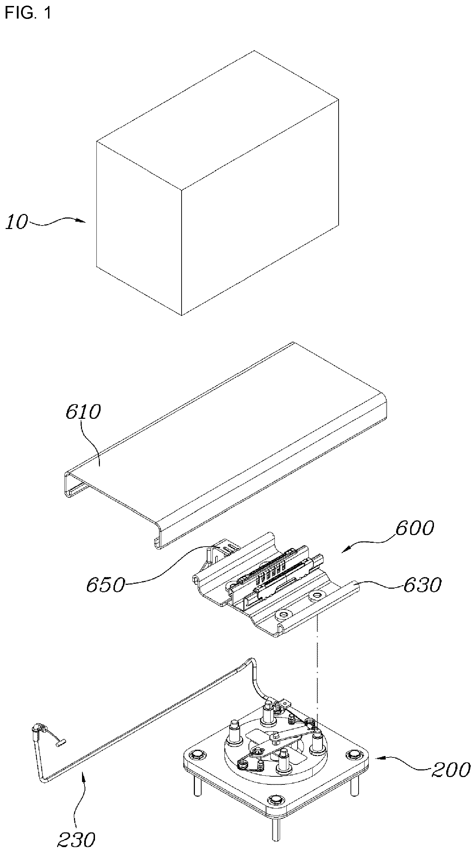

FIG. 1 is an exploded perspective view of a swivel and sliding apparatus for vehicle interior elements.

Referring to FIG. 1, the swivel and sliding apparatus according to the present disclosure includes an interior element 10 of a vehicle, a swivel unit 200 installed in the vehicle, and a sliding unit 600 provided with one side connected to the interior element 10 of the vehicle and the other side connected to the swivel unit 200 to cause the interior element 10 of the vehicle to slide with respect to the swivel unit 200.

According to one embodiment of the present disclosure, the interior element 10 of the vehicle may include at least one of a monitor which transmits media, a console which operates devices in the vehicle, a table, or a seat, but is not limited thereto.

However, for convenience of explanation, the present disclosure will be described using a seat of the vehicle which is selected as the interior element 10 of the vehicle.

The swivel unit 200 may be installed in the interior space of the vehicle. For example, the swivel unit 200 may be installed on the floor of the vehicle, and may interconnect the interior element 10 of the vehicle and the floor of the vehicle to rotate the interior element 10 of the vehicle with respect to the floor of the vehicle.

Installation of the swivel unit 200 is not limited to the floor of the vehicle, and the interior element 10 of the vehicle may be provided at a point in the vehicle where it is necessary to install the interior element 10 of the vehicle by the swivel unit 20. For example, the swivel unit 200 may be installed on the roof of the vehicle.

Further, the sliding unit 600 may be provided to enable free arrangement of the interior element 10 of the vehicle.

By connecting one side of the sliding unit 600 to the interior element 10 of the vehicle and connecting the other side of the sliding unit 600 to the swivel unit 200, the interior element 10 of the vehicle and the sliding unit 600 may be rotated together through the swivel unit 200. If the interior element 10 of the vehicle is a seat mounted on the vehicle, the sliding unit 600 may move the seat in a direction perpendicular to the forward direction of the seat.

Specifically, one side of the sliding unit 600 may be connected to one surface or some other part of the interior element 10 of the vehicle by a variety of means such as bolts-nuts, screws, adhesives, or the like. The sliding unit 600 may include an upper panel 610 coupled to one surface or a part of the interior element 10 of the vehicle, and a lower panel 630 provided with an upper surface or an upper portion to which the upper panel 610 is slidably coupled.

That is, the swivel unit 200 may be coupled to the lower panel 630, and the lower panel 630 coupled to the swivel unit 200 may be coupled to the upper panel 610 so that the interior element 10 of the vehicle and the sliding unit 600 may be rotated together through the swivel unit 200.

Here, the lower panel 630 may be provided to have a shorter length than the length of the upper panel 610 to be fixedly coupled to the swivel unit 200, and the upper panel 610 slides on the lower panel 630 to vary the center of rotation of the interior element 10 of the vehicle. In other words, the length of the upper panel 610 may be longer than the length of the lower panel 630 with respect to a direction in which the upper panel 610 slides.

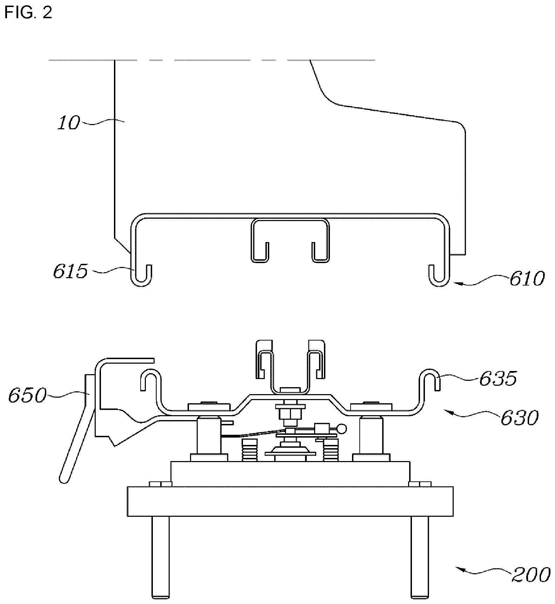

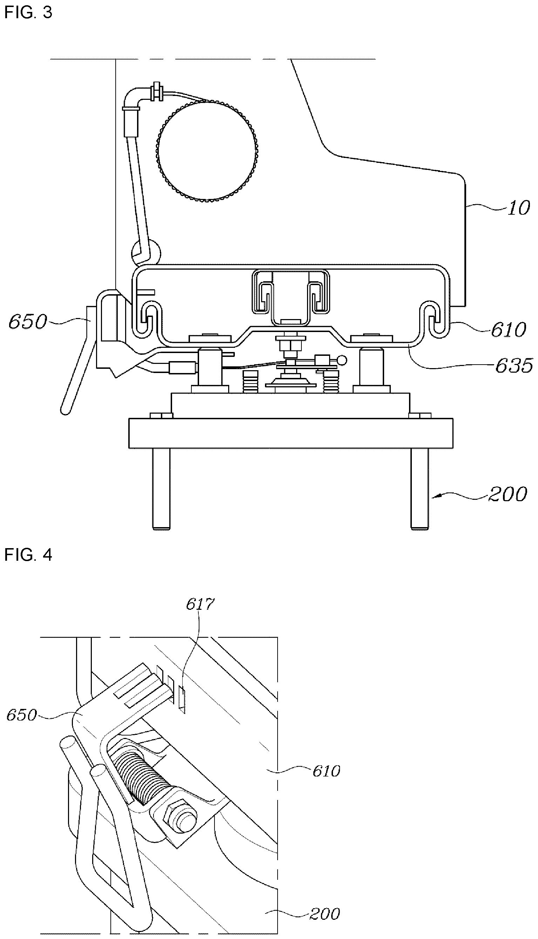

FIG. 2 is a cross-sectional view showing a state before the upper panel and the lower panel are coupled, and FIG. 3 is a cross-sectional view showing a state after the upper panel and the lower panel are coupled.

First bent portions 635 which extend upward and are bent outward are formed on he lower panel 630, and second bent portions 615 which extend downward and are bent inward are formed on the lower surface or the lower portion of the upper panel 610. The first bent portions 635 and the second bent portions 615 are engaged with each other so that the upper panel 610 is slidably coupled to the lower panel 630.

Changing the bent directions of the first bent portions 635 and the second bent portions 615 should also be considered as an embodiment, and the first bent portions 635 and the second bent portions 615 may be provided in a pair or provided in one or more pairs.

For example, as shown in FIG. 2, a plurality of first bent portions 635 may be formed along opposite sides the lower panel 630 and along a middle thereof, and a plurality of second bent portions 615 may also be formed along opposite sides of the upper panel 610 ang along a middle thereof, i.e., at positions corresponding to the first bent portions 635.

Since the upper panel 610 and the lower panel 630 should be engaged with and coupled to each other to stably support the load of the interior element 10 of the vehicle, the first bent portions 635 and the first bent portions 615 may be provided in one or more pairs.

The sliding unit 600 may further include a sliding latch 650 which fixes the interior element 10 of the vehicle to the sliding unit 600 or releases the interior element 10 of the vehicle from the sliding unit 600. FIG. 4 is a view showing operation of the sliding latch. Referring to FIGs. 2 to 4, a first part of the sliding latch 650 is rotatably coupled to one side of the sliding unit 600. Further, the second part of the sliding latch 650 may be inserted into fixing grooves 617 formed in the sliding unit 600 to fix the interior element 10 of the vehicle to the sliding unit 600 or may be released from the fixing grooves 617 to release the interior element 10 of the vehicle from the sliding unit 600.

More specifically, the first part of the sliding latch 650 may be coupled to the lower panel 630. The lower panel 630 may be fixedly coupled to the swivel unit 200, and the second part of the sliding latch 650 may be inserted into the fixing grooves 617 formed in the upper panel 610.

Accordingly, when the sliding latch 650 rotates around the lower panel 630 and the second part of the sliding latch 650 is released from the fixing grooves 617, the interior element 10 of the vehicle may become slidable.

In contrast, when the second part of the sliding latch 650 is inserted into the fixing grooves 617, the interior element 10 of the vehicle may be fixed to the sliding unit 600 and may become non-slidable or fixed.

The fixing grooves 617 are formed on the side surface of the upper panel 610, and in this case, a plurality of fixing grooves 617 may be formed in a direction in which the upper panel 610 extends, and thus, the fixing grooves 617 into which the second part of the sliding latch 650 is inserted may be changed depending on sliding of the upper panel 610.

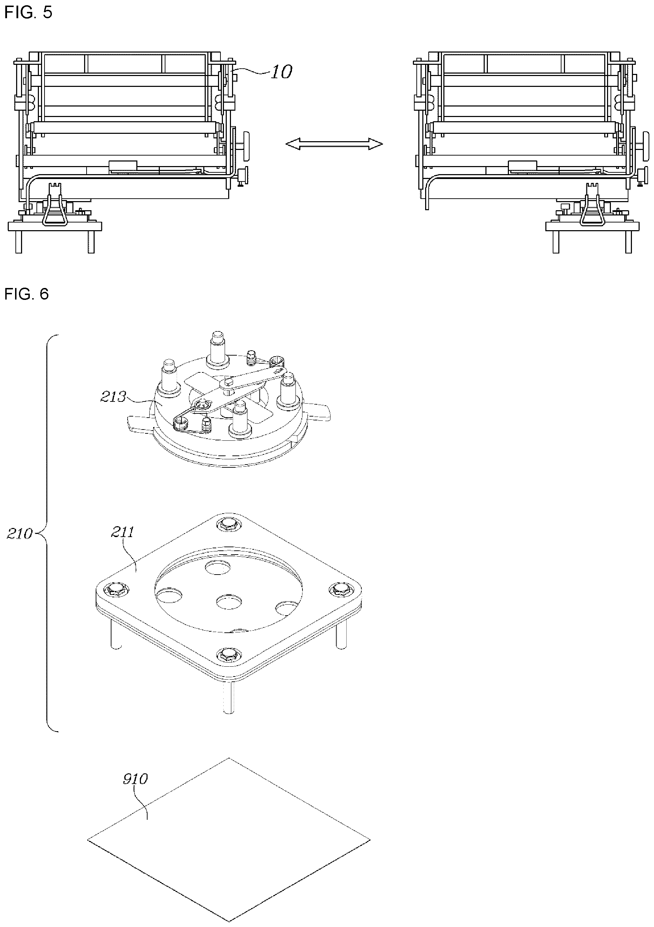

Depending on the above sliding unit 600, the interior element 10 of the vehicle may slide, as shown in FIG. 5.

The swivel unit 200 includes a swivel rotator 210 provided at one end of the interior element 10 of the vehicle to selectively allow the interior element 10 of the vehicle to become in a rotatable state by the application of external force, and a trigger 230 which applies external force to the swivel rotator 210.

The swivel rotator 210 may be coupled to one surface of the interior element 10 of the vehicle. Accordingly, the swivel rotator 210 may rotate the interior element 10 of the vehicle.

When external force is applied to the swivel rotator 210, the interior element 10 of the vehicle is in the rotatable state. The trigger 230 is a component which applies external force to the swivel rotator 210.

The trigger 230 may include an electric motor, and external force may be applied to the swivel rotator 210 by driving the electric motor, or a user may apply external force to the swivel rotator 210 by physically operating the trigger 230.

When the trigger 230 includes an electric motor, components, such as a controller configured to control the electric motor, may be further provided.

The rotating operation of the interior element 10 of the vehicle may also be performed by driving the electric motor, which may be provided on the swivel rotator 210, or may be performed by physically rotating the interior element 10 of the vehicle by the user. If the interior element 10 of the vehicle is rotated by driving the electric motor, the electric motor may be controlled by the controller.

More specifically, the swivel rotator 210 includes a floor plate 211 coupled to a floor 910 of the vehicle or a moving rail 930 provided on the floor 910, and a rotating plate 213 provided on the floor plate 211 and coupled to the sliding unit 600 to allow the interior element 10 of the vehicle to become in the rotatable state based on the application of external force.

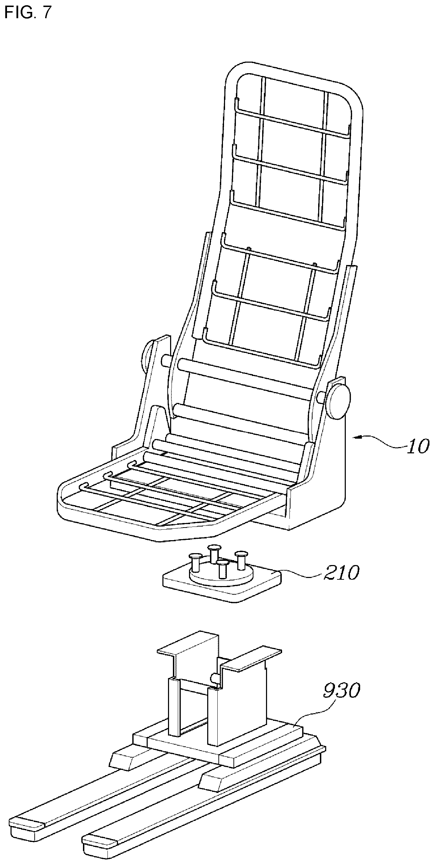

FIG. 6 is an exploded perspective view of the swivel rotator, and FIG. 7 is a perspective view showing the swivel rotator provided on the moving rail. Referring to FIGs. 6 and 7, the swivel rotator 210 may be directly coupled to the floor 910 to rotate the interior element 10 of the vehicle in a fixed position.

Alternatively, the swivel rotator 210 may be provided on the moving rail 930, which is provided on the floor 910 to move the interior element 10 of the vehicle in the length direction of the vehicle or in the width direction of the vehicle, so that a position in the interior space of the vehicle where the interior element 10 of the vehicle is rotated may be varied.

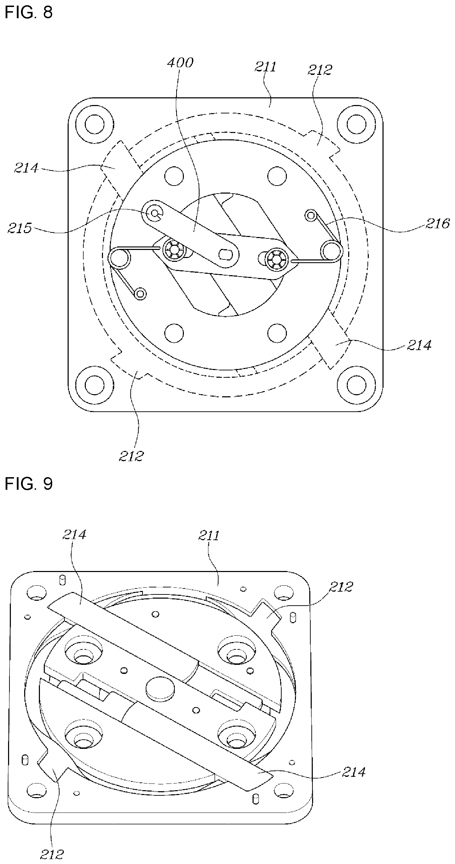

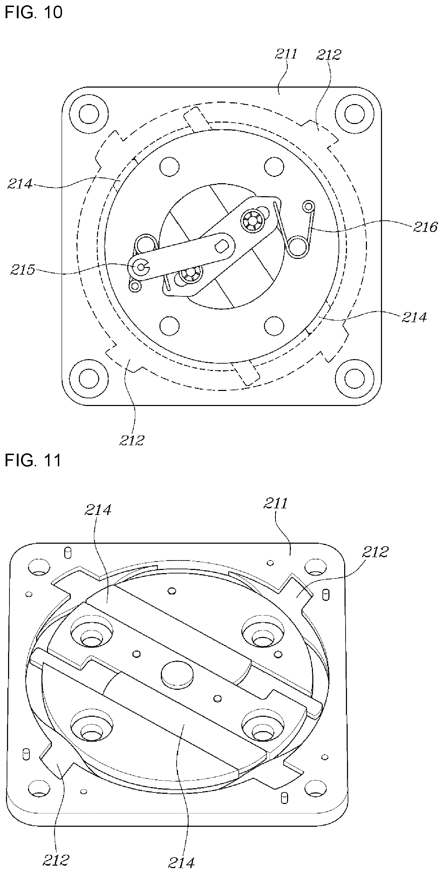

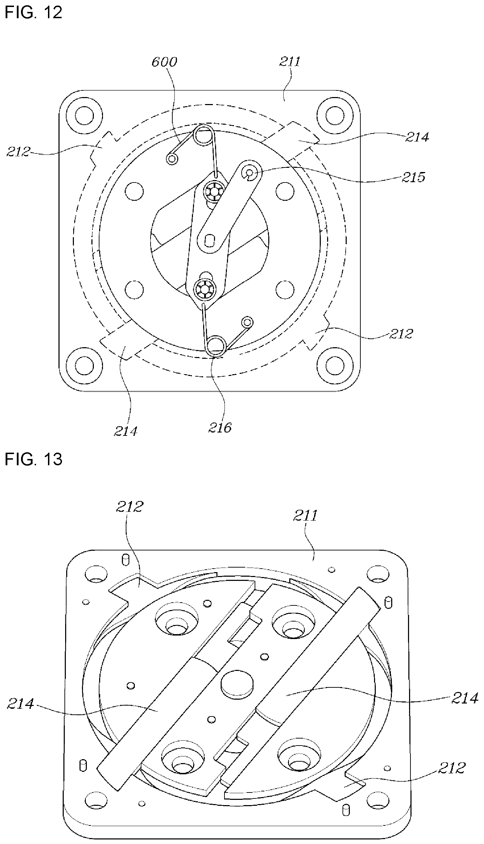

FIGs. 8 to 13 are views illustrating operation of the swivel rotator. Specifically, the floor plate 211 provided with insertion recesses 212 and the rotating plate 213, which are included in the swivel rotator 210, are viewed from above and below. FIGs. 8, 10, and 12 are top views of the swivel rotator, and FIGs. 9, 11, and 13 are bottom views of the swivel rotator. Further, FIGs. 8 and 9 show the state of the swivel rotator before external force is applied thereto, and FIGs. 10 and 11 show the state of the swivel rotator after external force is applied thereto. FIGs. 12 and 13 show the state of the swivel rotator in which rotation of the interior element of the vehicle has been completed.

More specifically, the rotating plate 213 includes locking pins 214 which move along opposite directions based on the application of external force. In addition, the insertion recesses 212 configured such that a first end of each of the locking pins 214 is insertable into a corresponding one of the insertion recesses 212 are formed in the floor plate 211.

The rotating plate 213 is partially accommodated in the floor plate 211, and particularly, the rotating plate 213 is accommodated in the floor plate 211 so that the locking pins 214 included in the rotating plate 213 and the insertion recesses 212 formed in the floor plate 211 are disposed at the same height.

The rotating plate 213 is provided with a rotary lever 215 on which external force may act. When external force is applied to the rotary lever 215, the locking pins 214 inserted into the insertion recesses 212, as shown in FIGs. 8 and 9, are separated from the insertion recesses 212, as shown in FIGs. 10 and 11. The interior element 10 of the vehicle may become in the rotatable state by separation of the locking pins 214 from the insertion recesses 212.

At this time, force is applied to the locking pins 214 in the direction toward the center of the rotating plate 213 by torsion springs 216 provided on the rotating plate 213, and thereby, the rotatable state of the interior element 10 of the vehicle is maintained.

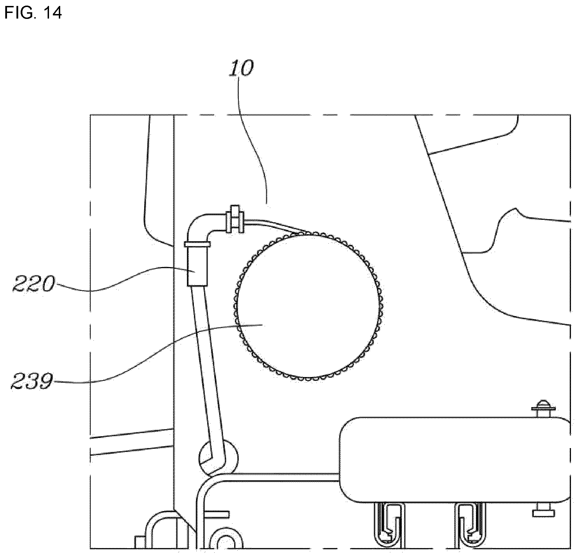

Thereafter, when the interior element 10 of the vehicle rotates, the rotating plate 213 rotates together. At this time, since force is applied to the locking pins 214 in the direction, in which the insertion recesses 212 are formed, by the torsion springs 216 provided on the rotating plate 213, when the locking pins 214 face the insertion recesses 212, a first end of each of the locking pins 214 is inserted into a corresponding one of the insertion recesses 212 to complete rotation of the interior element 10 of the vehicle, as shown in FIGs. 13 and 14.

Since the torsion springs 216 apply force in the insertion direction of the locking pins 214 in the state in which insertion of one of the insertion recesses 212 into the corresponding one of the insertion recesses 212 has been completed, insertion of the locking pins 214 is maintained, and the interior element 10 of the vehicle remains in a non-rotatable state until external force is applied to the rotary lever 215.

Hereinafter, the trigger 230 which applies external force to the swivel rotator 210 will be described. FIG. 14 shows the trigger 230. Referring to FIGs. 1 and 14, the trigger 230 includes a swivel lever 239 rotatably provided at the end of the interior element 10 of the vehicle and connected to the swivel rotator 210 through a wire 220, and applies external force to the swivel rotator 210 by rotation of the swivel lever 239.

The swivel lever 239 may be rotatably provided at the end of the interior element 10 of the vehicle. Specifically, the swivel lever 239 may be rotatably coupled to the interior element 10 of the vehicle through a shaft provided at the end of the interior element 10 of the vehicle. One end of the wire 220 is coupled to the swivel lever 239, and the other end of the wire 220 is coupled to the rotary lever 215 of the rotating plate 213. Therefore, when external force is applied to the wire 220 by rotation of the swivel lever 239, the wire 220 pulls the rotation lever 215 and the external force is applied to the swivel rotator 210.

As a method of rotating the swivel lever 239, the user may rotate the swivel lever 239 coupled to the shaft with physical force. Alternatively, if an electric motor is provided on the shaft to rotate the shaft with electrical force, the swivel lever 239 may be omitted.

As is apparent from the above description, a swivel and sliding apparatus for vehicle interior elements according to the present disclosure allows the center of rotation of an interior element of a vehicle to be changed when the interior element of the vehicle rotates. Accordingly, the position of the interior element of the vehicle in the interior space of the vehicle may be changed, and the space within the vehicle may perform various functions.

The disclosure has been described in detail with reference to example embodiments thereof. However, it will be appreciated by those skilled in the art that changes may be made in these embodiments without departing from the principles and spirit of the disclosure, the scope of which is defined in the appended claims and their equivalents.

## Claims

1. A swivel and sliding apparatus comprising:
an interior element to be installed in an interior space of a vehicle;
a swivel unit configured to rotate the interior element; and
a sliding unit provided with one side connected to the interior element and a remaining side connected to the swivel unit to cause the interior element to slide with respect to the swivel unit,
wherein the interior element and the sliding unit are rotated together through the swivel unit.

2. The swivel and sliding apparatus of claim 1, wherein the interior element comprises at least one of a monitor configured to transmit media, a console configured to operate a device in the vehicle, a table, and a seat.

3. The swivel and sliding apparatus of claim 1 or 2, wherein the sliding unit comprises:
an upper panel coupled to the interior element; and
a lower panel configured such that the upper panel is slidably coupled to the lower panel so as to allow sliding of the interior element.

4. The swivel and sliding apparatus of claim 3, wherein:
the lower panel is coupled to the swivel unit; and
a length of the upper panel disposed on the lower panel is longer than a length of the lower panel with respect to a direction in which the upper panel slides.

5. The swivel and sliding apparatus of claim 3 or 4, wherein:
first bent portions configured to extend upward and be bent outward are formed on the lower panel;
second bent portions configured to extend downward and be bent inward are formed on the upper panel; and
the first bent portions and the second bent portions are configured to be engaged with each other so that the upper panel is slidably coupled to the lower panel.

6. The swivel and sliding apparatus of claim 5, wherein:
the first bent portions are provided in plural along opposite sides of the lower panel and along a middle thereof; and
the second bent portions are provided in plural along opposite sides of the upper panel and along a middle thereof.

7. The swivel and sliding apparatus of one of claims 1-6, wherein the sliding unit comprises a sliding latch configured to fix the interior element to the sliding unit or to release the interior element from the sliding unit.

8. The swivel and sliding apparatus of claim 7, wherein:
a first part of the sliding latch is rotatably coupled to one side of the sliding unit; and
a second part of the sliding latch is inserted into fixing grooves formed on the sliding unit to fix the interior element to the sliding unit or is released from the fixing grooves to release the interior element from the sliding unit.

9. The swivel and sliding apparatus of claim 7 or 8, wherein the sliding unit further comprises;
an upper panel coupled to the interior element and including fixing grooves formed therein; and
a lower panel configured such that the upper panel is slidably coupled to the lower panel so as to allow sliding of the interior element,
wherein the first part of the sliding latch is rotatably coupled to the lower panel, and the second part of the sliding latch is inserted into the fixing grooves formed in the upper panel to fix the interior element to the sliding unit or is released from the fixing grooves to release the interior element from the sliding unit.

10. The swivel and sliding apparatus of one of claims 1-9, wherein the swivel unit comprises:
a swivel rotator configured to allow the interior element to selectively assume a rotatable state based on application of external force; and
a trigger configured to transmit external force to the swivel rotator.

11. The swivel and sliding apparatus of claim 10, wherein the swivel rotator comprises:
a floor plate configured to be coupled to a floor of the vehicle or a moving rail provided on the floor; and
a rotating plate provided on the floor plate and coupled to the sliding unit to allow the interior element to assume the rotatable state based on application of external force.

12. The swivel and sliding apparatus of claim 11, wherein:
the rotating plate comprises locking pins configured to move along opposite directions based on the application of external force;
insertion recesses formed on the floor plate such that a first end of each of the locking pins is insertable into a corresponding one of the insertion recesses; and
when the first end of each of the locking pins is separated from the corresponding one of the insertion recesses, the interior element assumes the rotatable state and, when the first end of each of the locking pins is inserted into the corresponding one of the insertion recesses, the interior element assumes a non-rotatable state.

13. The swivel and sliding apparatus of one of claims 10-12, wherein:
the trigger comprises a swivel lever rotatably provided at one end of the interior element and connected to the swivel rotator through a wire; and
external force is applied to the swivel rotator by rotation of the swivel lever.

14. The swivel and sliding apparatus of one of claims 1-13, wherein:
the interior element is a seat; and
the sliding unit is configured to move the seat in a direction perpendicular to a forward direction of the seat.
